Europäisches Patentamt

European Patent Office

Office européen des brevets

(11) Veröffentlichungsnummer: **0 303 149 B1**

## (12) EUROPÄISCHE PATENTSCHRIFT

(45) Veröffentlichungstag der Patentschrift: **15.01.92**

(21) Anmeldenummer: **88112488.7**

(22) Anmeldetag: **01.08.88**

(51) Int. Cl.⁵: $C02F$ **3/28**, $B01D$ **24/12**

(54) **Festbett-Umlaufreaktor für Aufstrom-Betrieb.**

(30) Priorität: **14.08.87 DE 3727236**

(43) Veröffentlichungstag der Anmeldung:
**15.02.89 Patentblatt 89/07**

(45) Bekanntmachung des Hinweises auf die
Patenterteilung:
**15.01.92 Patentblatt 92/03**

(84) Benannte Vertragsstaaten:
**AT BE CH DE FR GB IT LI LU NL SE**

(56) Entgegenhaltungen:
**EP-A- 0 153 299**
**DE-B- 1 169 419**
**US-A- 4 331 542**

(73) Patentinhaber: **SIEMENS AKTIENGESELL-
SCHAFT**
**Wittelsbacherplatz 2**
**W-8000 München 2(DE)**

(72) Erfinder: **Fahje, Henry**
**Stresemannstrasse 23**
**W-6457 Maintal 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Festbett-Umlaufreaktor für Aufstrom-Betrieb zum anaeroben biologischen Abbau der in der zu reinigenden Flüssigkeit enthaltenen Belastungsstoffe, gemäß Oberbegriff des Anspruchs 1.

Derartige Festbett-Umlaufreaktoren im Aufstrom-Betrieb werden zum anaeroben biologischen Abbau, z.B. stark belasteter Abwässer aus der Nahrungsmittelindustrie, z.B. aus Brauereien, Zucker-und Stärkefabriken, Schlachthöfen, Papier- und Zellstoffindustrie usw. eingesetzt. Das poröse Festbett-Trägermaterial dient zur Fixierung und Aufkonzentration der Mikroorganismen und verhindert eine Auswaschung derselben. Durch die Konzentration der Mikroorganismen auf dem Trägermaterial bzw. in den verzweigten Poren und Zwischenraumvolumina des Trägermaterials ist eine optimale Verteilung des Umlauf-(Zirkulations-)Stromes mit der bzw. dem zu reinigenden Flüssigkeit bzw. Abwasserstrom erforderlich. Bevorzugt werden poröse Trägermaterialien verwendet. Es sollen möglichst gleichmäßige Korngrößen (Strukturen) verwendet werden. Sonst entstünde kein gleichmäßiger Aufbau der Zwischenraumabstände. Dadurch wäre eine gleichmäßige Verteilung nicht möglich und es käme zu Kanalbildungen. Bisher wurden als geeignet befunden bzw. hat man verwendet: Sand, Sinterglas, Kohle, Schlacke, Lavagestein, Keramik, Blähton, Kunststoff-Formkörper. Diese Aufzählung ist nicht abschließend, sondern zeigt nur eine Auswahl der wichtigsten Trägermaterialien. Durch die Korngröße des Trägermaterials und die Porengröße bzw. Struktur wird eine gute Haftung für die Mikroorganismen erreicht.

Bei einem solchen Festbett-Umlaufreaktor bestehen für den zuverlässigen Dauerbetrieb eine Reihe von Anforderungen:

- Die Strömungsgeschwindigkeit über dem Querschnitt des Reinigungs-Haufwerks gesehen muß möglichst gleichmäßig und darf nicht zu hoch sein, da anderenfalls unbeabsichtigter Weise wertvolle Biomasse abgespült werden könnte;
- eng im Zusammenhang damit steht die Forderung, daß sich keine Durchbrüche in der Festbettschüttung ausbilden, d.h. von Biomasse freigespülte Kanalzonen, durch welche dann das Rohwasser weitgehend unaufbereitet seinen Weg nehmen könnte;
- durch eine Steigerung des Umlaufes muß es möglich sein, abgestorbene Biomasse (Schlamm) in Betriebsrichtung auszutragen.

Der Erfindung liegt die Aufgabe zugrunde, den gattungsgemäßen Festbett-Umlaufreaktor so auszubilden, daß unter Erfüllung der vorstehend aufgezeigten Anforderungen eine besonders strömungsgünstige Einleitung, sowie Rezirkulation und Ausleitung des Umlaufwassers erfolgen. Eine Unteraufgabe besteht darin, eine besonders günstige Einbindung der externen Anschlußrohrleitungen in das interne, zentrale Rohrsystem des Festbett-Umlaufreaktors zu schaffen.

Erfindungsgemäß wird die gestellte Aufgabe bei dem gemäß Oberbegriff des Anspruchs 1 definierten Festbett-Umlaufreaktor durch die im Kennzeichen des Patentanspruchs 1 angegebenen Merkmale gelöst. Vorteilhafte Weiterbildungen sind in den Patentansprüchen 2 bis 6 angegeben.

Die mit der Erfindung erzielbaren Vorteile sind vor allem darin zu sehen, daß durch die trichterförmige Erweiterung des inneren bzw. Zentral-Rohr-Systems eine Reduzierung der Auflagefläche für die Trägermaterial-Säule bewirkt wird. Die damit einhergehende Flächenreduzierung für den abstützenden Siebboden führt zu einer Erhöhung des Druckverlustes des von unten zuströmenden Rohwassers und damit zu einer guten Verteilung über die gesamte aktive Reaktor-Querschnittsfläche. Der Reaktorbehälter bildet mit der zentral angeordneten Trichterpartie des Zentral-Rohr-Systems einen sich stetig erweiternden Strömungsquerschnitt, eine Art Ring-Diffusor. Der Siebboden ist aufgrund der trichterförmigen Erweiterung des Kanalwandsystems in seiner Auflagefläche wesentlich, d.h. z.B. um 50 %, reduziert. Dadurch sind besondere Unterstützungskonstruktionen für den Siebboden zur Abtragung der Gewichtsbelastung der Trägermaterial-Säule nicht oder nur in kleinem Umfange erforderlich. Mit dem Zentral-Rohr-System läßt sich auf günstige Weise ein äußerer Anschlußkopf mit der Einströmrohrleitung für das Roh-und Umlaufwasser, eine Ausströmrohrleitung für das Umlaufwasser und ferner eine Leitung kleineren Durchmessers für das abzuziehende Reinwasser vereinigen. Damit ist eine sehr kompakte Bauform zu erreichen. Insgesamt kann durch die Einleit-Ausleit-Umverteileinrichtungen für den Umlaufstrom eine gute hydraulische Verteilung erreicht werden, was sich günstig auf eine große Konzentration von Biomasse auf dem Festbett-Trägermaterial auswirkt.

Im folgenden werden anhand der Zeichnung ein Ausführungsbeispiel der Erfindung sowie weitere Merkmale und Vorteile erläutert. Darin zeigt in vereinfachter Darstellung, unter Fortlassung der für das Verständnis der Erfindung nicht erforderlichen Teile:

FIG 1     einen Festbett-Umlaufreaktor nach der Erfindung im Längsschnitt seines Reaktorbehälters.

FIG 2     einen Querschnitt nach der Linie II-II aus FIG 1, wobei wegen des über den Umfang gesehen gleichartigen Aufbaus lediglich eine Hälfte des Schnitts und innerhalb dieser Schnitthälfte der Siebboden nur im Bereich eines Quadranten dargestellt ist.

FIG 3    den Schnitt nach der Linie III-III aus FIG 1 durch den Rohranschlußkopf.

FIG 4    den Teilschnitt längs der Linie IV-IV aus FIG 2 durch einen Teilbereich des Siebbodens.

Der im wesentlichen hohlzylindrische Reaktorbehälter 1 des als Ganzes mit FU bezeichneten Festbett-Umlaufreaktors besteht aus korrosionsbeständigem Stahlblech. Es kann auch C-Stahl beschichtet (gummiert) verwendet werden und bei kleineren Dimensionen auch Kunststoff. Er weist eine Längsachse z-z und einen Siebboden 2 in Leichtbauweise auf. Der zylindrische Reaktorbehälter 1 stützt sich mit Boden 3.1 und Mantel 1.1 auf einer, z.B. aus Beton bestehenden Fundamentkonstruktion 3 ab. Diese Fundamentausführung ist den Bodenverhältnissen am Aufstellungsort anzupassen, welche letztere auf ihrer der Behälterunterseite bzw. dem Siebboden 2 zugewandten Seite den Behälterboden 3.1 in einer konischen Vertiefung aufnimmt. Der Boden 3.1 bildet - wie es die Strömungspfeile f1 symbolisieren - eine Einströmkammer K1 für das Rohwasser und begrenzt diese nach unten derart, daß das Rohwasser gleichmäßig verteilt durch die Unterseite des kreisringförmigen Siebbodens 2 hindurchtreten kann. Der Behälterboden 3.1 ist mit dem Behältermantel 1.1 längs einer nicht näher bezeichneten Ringnaht verschweißt.

Der Reaktorbehälter 1 besteht im einzelnen außer dem schon erwähnten Behälterboden 3.1 aus dem Siebboden 2, dem Behältermantel 1.1, einem flach-kegelförmigen Dach 1.2 mit Gasauslaßstutzen 16 im Bereich der Kegelspitze des Daches sowie aus einem im Bereich der Achse z-z bzw. der Mitte des Reaktorbehältes 1 diesen durchdringenden zentralen Rohr-System 4 mit trichterförmiger Erweiterung 4.1 in seinem unteren Bereich. Der Ringraum 5 zwischen dem zentralen Rohr-System 4 und dem Behältermantel 1.1 ist mit dem porösen Festbett 6, bestehend aus dem Trägermaterial in Form einer Schüttung 6a und der an diesem Trägermaterial immobilisierten und an dieses adaptierten Biomasse, ausgefüllt. Im dargestellten Beispiel besteht das Trägermaterial 6a aus Lavaschlacke, die Korngröße wird entsprechend der Reaktorgröße variiert und kann z.B. bei 10 mm bis 40 mm liegen.

Das zentrale Rohr-System 4 ist in Richtung auf sein unteres, im Bereich des Siebbodens 2 angeordnetes Ende, wie erwähnt, trichterförmig erweitert, siehe Trichter 4.1, und im Ringraum zwischen dem Außenumfang der Trichterbasis 4.1a und dem Innenumfang des Behältermantels 1.1 ist der Siebboden 2 aufgelegt, der zur Abstützung des Trägermaterials 6a und zur Einleitung der bzw. des zu reinigenden Flüssigkeit bzw. Wassers von unten in das Festbett 6 dient.

Unterhalb der Trichterbasis 4.1a und des Siebbodens 2 befindet sich die schon erwähnte Einströmkammer K1 für das zu reinigende Wasser und ein pro Anschlußkopf RK mit wenigstens einem mit der Einströmkammer K1 kommunizierenden Einströmstutzen r11 und mit wenigstens einem, mit dem Inneren des zentralen Rohr-Systems 4 kommunizierenden Ausströmstutzen r21. Der Rohranschlußkopf RK hat weiterhin wenigstens zwei zueinander konzentrische Rohrleitungen r12 (Außenrohr) und r22 (Innenrohr), wobei das Außenrohr r12 in die Einströmkammer K1 mündet und das Innenrohr r22 an das Kanalwandsystem 4 über dessen Trichterbasis 4.1a, und zwar über eine konisch nach unten ausgewölbte Bodenwand 4.1b des Trichters 4.1, angeschlossen ist. Dabei mündet der Einströmstutzen r11 in die Ringkammer K11 zwischen Außenrohr r12 und Innenrohr r22, und der Ausströmstutzen r21 ist außerhalb der axialen Länge des Außenrohres r12 an das Innenrohr r22 angeschlossen. Die Ringkammer K11 zwischen Außen- und Innenrohr und der vom Innenrohr r22 gebildete Ausströmkammerraum K34 sind jeweils durch Abschlußdeckel bzw. Stirnwände 7 nach außen abgeschlossen.

Der Reaktorbehälter 1 umgrenzt oberhalb des Festbettes 6 einen Kammerraum K2 für Wasserüberstau, dessen Spiegel mit 8 bezeichnet ist, und einen darüber befindlichen Gasraum G, welcher in den schon erwähnten Gasauslaßstutzen 16 mündet. Letzterer ist innerhalb der Deckwand 1.2 vorzugsweise an der geodätisch höchsten Stelle, d.h. im Bereich des Scheitelpunktes der kegelförmigen Deckwand 1.2, angeordnet. Innerhalb des Raumes K2, G für Wasserüberstau und Gas ist eine Kammer K31 durch die poröse Korbkonstruktion 9 einer Schaumfalle abgegrenzt, welche Kammer K31 mit dem oberen Ende 4.2 des zentralen Rohr-Systems 4 verbunden ist und mit diesem einen Einlaufsammler für Umlaufwasser bildet. Die Korbkonstruktion 9 ist im Querschnitt laternenförmig mit einem sich konisch erweiternden Einlauf-Trichter 9.1 und einer sich daran anschließenden Korbwand 9.2. Die Korbwand 9.2 ist an ihrer Oberkante mit dem Dach 1.2 verbunden. Innerhalb der Kammer K31 ist wenigstens ein Einlaufsammler ES für Reinabwasser angeordnet. Dieser ist über eine Rohrleitung 10 mit einem Reinwasserablauf 11 des Reaktorbehälters 1 verbunden. Der Einlaufsammler ES ist etwa tassenförmig mit einer in die Rohrleitung 10 mündenden bodenseitigen Öffnung es1 und mit Bohrungen es2 im oberen Bereich seiner Mantelwand sowie Randaussparungen es3 zur möglichst laminaren Einleitung des Reinwassers in den Einströmsammler ES.

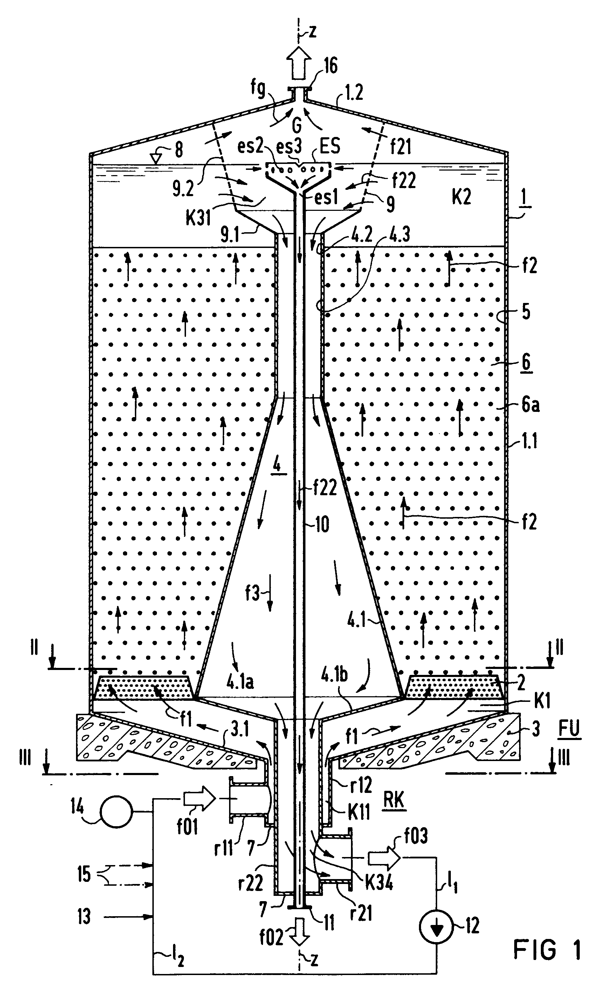

Im unteren Teil der FIG 1 erkennt man den äußeren Teil des Wasserkreislaufes mit Zirkulationspumpe 12, der an den Ausströmstutzen r21 angeschlossenen Saugleitung $1_1$ und der zwischen Druckseite der Pumpe 12 und dem Einströmstutzen r11 verlegten Druckleitung $1_2$ für Roh- und Umlaufwasser. Die Strömungsrichtung ist durch die Pfeile f01 (Einströmung) und f03 (Ausströmung) symbolisiert, der Reinwasserablauf durch den Pfeil f02. An die Druckleitung $1_2$ ist, wie schematisch durch einen Pfeil angedeutet, die Rohabwasser-Einspeisung 13 angeschlossen, ferner ist bei 14 eine pH-Meßstelle angedeutet, und bei 15 kann durch Einspeisung saurer bzw. basischer Lösung eine Korrektur des pH-Wertes des Roh- und Umlaufwassers vorgenommen werden.

Für den Reaktorbehälter 1 kommen solche mit rechteckiger, insbesondere quadratischer, oder allgemein polygonaler Grundfläche in Betracht. Es muß nicht unbedingt eine prismatische Gestalt vorliegen (bei der die Querschnittsabmessungen in Höhenrichtung gesehen gleich bleiben), es könnte auch eine nach oben schwach tütenförmig- oder konisch sich erweiternde Gestalt gewählt werden. Besonders günstig ist indessen die gewählte Zylinderform wegen der in Umfangsrichtung vorliegenden symmetrischen Strömungsbedingungen, so wie dargestellt. Beim dargestellten Ausführungsbeispiel liegt der Durchmesser $D_1$ der Trichterbasis 4.1a des zentralen Rohr-Systems 4 im Bereich $0,4 \leq D_1 \leq 0,6$ D, insbesondere bei etwa 0,5 D des Durchmessers D des Reaktorbehälters 1, wobei die verbleibende Ringzone mit der Ringweite $(D - D_1)/2$ vom Siebboden 2 bedeckt ist.

Die nicht maßstabsgetreu dargestellte trichterförmige Erweiterung 4.1 des zentralen Rohr-Systems 4 erstreckt sich in Behälterachsrichtung z-z über wenigstens ein Viertel der Höhe des Festbettes 6. Der obere Teil 4.3 des Kanalsystems 4 entspricht mit seiner lichten Weite derjenigen der Trichterspitze und setzt sich als zylindrische Leitung gleichen Querschnitts durch das Festbett 6 nach oben bis hin zum Einlauf-Trichter 9.1 der Schaumfalle 9 fort, bezüglich welcher die Leitung 4.3 einen Einlaufkanal für das Umlaufwasser gemäß den Strömungspfeilen f22 bildet.

Die Reinwasser-Rohrleitung 10 ist vom Reinwasser-Einlaufsammler ES koaxial zum Rohr-System 4 und zentrisch durch dieses nach unten bis zum Reinwasser-Ablauf 11 verlegt, wobei sie auch das Innenrohr r22 zentrisch durchdringt. Besondere Auslaß-Armaturen für das Reinwasser sind der Einfachheit halber weggelassen.

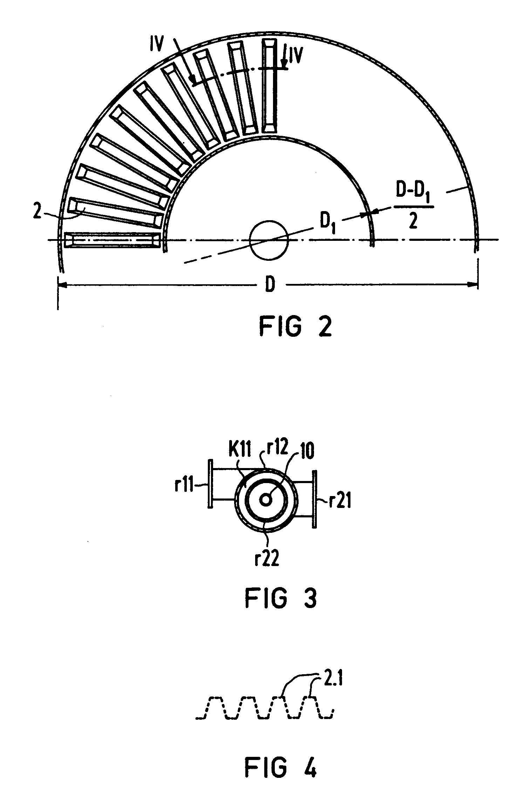

Der Siebboden 2 ist - wie man es insbesondere aus FIG 2 und 4 erkennt - aus einer Vielzahl von in Umfangsrichtung aneinandergereihten, perforierten Wellenprofilen 2.1 gebildet. Diese Wellenprofile 2.1 sind an ihrem Innen- und an ihrem Außenumfang jeweils mit der Trichterbasis 4.1a bzw. dem Innenumfang der Mantelwand 1.1 verbunden. Besonders günstig sind die dargestellten Trapez-Profil-Segmente, weil sich dadurch ebene Abstützflächen für die Festbett-Schüttung 6 ergeben. Das Trapezprofil vergrößert außerdem die Eintrittsfläche und vermeidet weitgehend eine Verlagerung derselben.

Im Betrieb gelangt das Gemisch aus Umlauf- und Rohwasser, durch den Rohrstutzen r11 und die Ringkammer K11 aufwärts in die Eintrittskammer K1, es verteilt sich unter dem Siebboden 2 gemäß Strömungspfeilen f1, durchströmt den Siebboden 2 und dringt in das Festbett 6 ein, welches es von unten nach oben gemäß Strömungspfeilen f2 durchströmt. Die Durchströmung ist allerdings verhältnismäßig langsam, weil ausreichende Verweilzeiten für die Flüssigkeiten gegeben sein müssen, damit die Mikroben mit den organischen Inhaltsstoffen des Wassers versorgt werden. Bei diesem Abbau bildet sich Biogas, welches nach oben perlt durch das Festbett 6 und den Kammerraum K2 und nach Durchdringen der Korbkonstruktion 9 durch den Gasabzug 15 nach außen gelangt. Das vorbehandelte Wasser sammelt sich im Wasserüberstau und teilt sich in zwei Teilströme: Der eine Teilstrom fließt gemäß Strömungspfeilen f22 durch die poröse Wand 9 der Schaumfalle in die Kammer K31 und von hier in das zentrale Rohr-System 4 gemäß Strömungspfeilen f3 nach unten durch den Trichter 4.1 in das daran anschließende Innenrohr r22 des Rohranschlußkopfes RK und von hier über den Ausströmstutzen r21 gemäß Strömungspfeil f03 in die Saugleitung $1_1$, von wo es die Pumpe 12 in die Druckleitung $1_2$ als Umlaufwasser drückt. Dort wird es mit dem über der Leitung 13 ankommenden Rohwasser gemischt und gemäß Strömungspfeil f01 in den Einströmstutzen r11 und das Außenrohr r12 gedrückt. Dabei wird u.a. der pH-Wert gemessen (14) und gegebenenfalls korrigiert (15). Weitere Meßeinrichtungen, wie z.B. Temperatur-und Druckmessung, sind nicht dargestellt. Der zweite Strom gelangt aus der Kammer K31 gemäß Strömungspfeil f21 in den Einlaufsammler ES, und zwar als relativ sauberes Reinabwasser durch die zentrale Reinabwasser-Rohrleitung 10 zum Reinabwasser-Ablauf 11 am Rohranschlußkopf RK.

**Patentansprüche**

1.  Festbett-Umlaufreaktor für Aufstrom-Betrieb zum anaeroben biologischen Abbau der in der zu reinigenden Flüssigkeit enthaltenen Belastungsstoffe, wobei der Festbett-Umlaufreaktor (FU) aus einem Reaktorbehälter (1) mit Behälterboden (3.1), Siebboden (2), Behältermantel (1.1) und Dach (1.2) sowie einem im Bereich der Achse bzw. Mitte (z-z) des Reaktorbehälters (1) diesen durchdringenden zentralen Rohr-System (4) besteht und der Ringraum (5) zwischen dem zentralen Rohr-System (4) und dem Behältermantel (1.1) mit dem porösen Festbett (6), bestehend aus der Trägermaterial-Schüttung (6a) und der an dieses Trägermaterial adaptierten Biomasse, ausgefüllt ist, **gekennzeichnet** durch die folgenden Merkmale:

- Das zentrale Rohr-System (4) ist in Richtung auf sein unteres, im Behälterbodenbereich angeordnetes Ende trichterförmig erweitert, und im Ringraum zwischen Außenumfang der Trichterbasis (4.1a) und dem Innenumfang des Behältermantels (1.1) ist ein Siebboden (2) angeordnet, der zur Abstützung des Trägermaterials (6a) und zur Einleitung der zu reinigenden Flüssigkeit von unten in das Festbett (6) dient;
- unterhalb der Trichterbasis (4.1a) und des Siebbodens (2) befindet sich eine Einströmkammer (K1) für die zu reinigende Flüssigkeit und ein Rohr-Anschlußkopf (RK) mit wenigstens einem mit der Einströmkammer (K1) kommunizierenden Einströmstutzen (r11) und mit wenigstens einem, mit dem Inneren des zentralen Rohr-Systems (4) kommunizierenden Ausströmstutzen (r21);
- der Reaktorbehälter (1) umgrenzt oberhalb des Festbettes (6) einen Raum (K2) für Wasserüberstau und einen darüber befindlichen Gasraum (G), welcher in wenigstens einen in der Deckwand (1.2) vorzugsweise an der geodätisch höchsten Stelle angeschlossenen Gasauslaßstutzen (16) mündet, wobei innerhalb des Raumes für Wasserüberstau und Gas (K2, G) eine Teilkammer (K31) durch die poröse Wandkonstruktion (9) einer Schaumfalle abgegrenzt ist, welche Teilkammer (K31) mit dem oberen Ende (4.2) des zentralen Rohr-Systems (4) verbunden ist und mit diesem einen Einlaufsammler für Umlaufwasser bildet;
- innerhalb der Teilkammer (K31) ist wenigstens ein Einlaufsammler (ES) für Reinabwasser angeordnet und über eine Rohrleitung (10) mit einem Reinwasser-Ablauf (11) des Reaktorbehälters (1) verbunden.

2. Festbett-Umlaufreaktor nach Anspruch 1, **dadurch gekennzeichnet,** daß die trichterförmige Erweiterung (4.1) des zentralen Rohr-Systems (4) sich in Behälterachsrichtung (z-z) über wenigstens ein Viertel der Höhe des Reinigungs-Haufwerks (6) erstreckt, und daß der obere Teil (4.3) des zentralen Rohrsystems (4) als Leitung gleichen Querschnitts ausgebildet ist.

3. Festbett-Umlaufreaktor nach einem der Ansprüche 1 oder 2, **dadurch gekennzeichnet,** daß der Rohranschlußkopf (RK) wenigstens zwei zueinander konzentrische Rohrleitungen aufweist, wobei das Außenrohr (r12) in die Einströmkammer (K1) mündet und das Innenrohr (r22) an das zentrale Rohrsystem (4) über dessen Trichterbasis (4.1a) angeschlossen ist, und wobei der Einströmstutzen (r11) an das Außenrohr (r12) und der Ausströmstutzen (r21) an das Innenrohr (r22) angeschlossen ist.

4. Festbett-Umlaufreaktor nach einem der Ansprüche 1 bis 3, **dadurch gekennzeichnet,** daß die Reinwasser-Rohrleitung (10) vom Reinwasser-Einlaufsammler (ES) zentrisch durch das zentrale Rohr-System (4) und durch das Innenrohr (r22) bis zu einem Reinwasser-Ablauf (11) verlegt ist.

5. Festbett-Umlaufreaktor nach Anspruch 1, **dadurch gekennzeichnet,** daß der Siebboden (2) aus einer Vielzahl von in Umfangsrichtung aneinandergereihten, perforierten Wellenprofil-Segmenten (2.1) besteht.

6. Festbett-Umlaufreaktor nach Anspruch 5, **gekennzeichnet** durch ein Trapez-Wellenprofil.

**Claims**

1. Fixed-bed loop reactor for upstream operation for the anaerobic biological disintegration of the load substances contained in the liquid to be cleaned, whereby the fixed-bed loop reactor (FU) consists of a reactor container (1) with container floor (3.1), perforated floor (2), container casing (1.1) and roof (1.2) as well as a central pipe system (4) penetrating the reactor container (1) in the region of the axis or middle (z-z) of the reactor container (1) and the annular space (5) between the central pipe system (4) and the container casing (1.1) is filled with the porous fixed bed (6), consisting of the carrier-material fill (6a) and the biomass adapted to this carrier material, characterized by the following features:

- the central pipe system (4) is widened in a funnel-shaped manner in the direction of its lower end arranged in the region of the container floor, and in the annular space between the outer circumference of the funnel base (4.1a) and the inner circumference of the container casing (1.1) there is arranged a perforated floor (2) which serves to support the carrier material (6a) and to introduce the liquid to be cleaned from below into the fixed bed (6);

- underneath the funnel base (4.1a) and the perforated floor (2) there is located an inflow chamber (K1) for the liquid to be cleaned and a pipe connection head (RK) with at least one inflow connecting piece (r11) communicating with the inflow chamber (K1) and with at least one outflow connecting piece (r21) communicating with the inside of the central pipe system (4);

- the reactor container (1) defines above the fixed bed (6) a space (K2) for water flooding and a gas space (G) located thereabove, which opens into at least one gas outlet connecting piece (16) attached in the cover wall (1.2) preferably to the geodetically highest point, whereby within the space for water flooding and gas (K2, G) a partial chamber (K31) is separated off by the porous wall construction (9) of a foam trap, the partial chamber (K31) being connected to the upper end (4.2) of the central pipe system (4) and forming with the latter an inlet collector for circulating water;

- within the partial chamber (K31) at least one inlet collector (ES) for clean waste water is arranged and by means of a pipe line (10) is connected to a clean-water drain (11) of the reactor container (1).

2. Fixed-bed loop reactor according to claim 1, characterized in that the funnel-shaped widening (4.1) of the central pipe system (4) extends in the direction of the container axis (z-z) over at least a quarter of the height of the cleaning stack (6), and in that the upper part (4.3) of the central pipe system (4) is constructed as tubing of the same cross section.

3. Fixed-bed loop reactor according to one of claims 1 or 2, characterized in that the pipe connection head (RK) has at least two pipe lines concentric to one another, the outer pipe (r12) opening into the inflow chamber (K1) and the inner pipe (r22) being attached to the central pipe system (4) by means of its funnel base (4.1a), and the inflow connecting piece (r11) being attached to the outer pipe (r12) and the outflow connecting piece (r21) being attached to the inner pipe (r22).

4. Fixed-bed loop reactor according to one of claims 1 to 3, characterized in that the clean-water pipe line (10) is laid from the clean-water inlet collector (ES) centrally through the central pipe system (4) and through the inner pipe (r22) to a clean-water drain (11).

5. Fixed-bed loop reactor according to claim 1, characterized in that the perforated floor (2) consists of a plurality of perforated wave-profile segments (2.1) in series with one another in the circumferential direction.

6. Fixed-bed loop reactor according to claim 5, characterized by a trapezoidal wave profile.

**Revendications**

1. Réacteur à circulation et à lit fixe, fonctionnant suivant un courant ascendant, pour la décomposition biologique anaérobie des charges contenues dans le liquide à épurer, le réacteur (FU) à circulation et à lit fixe étant constitué d'une cuve de réacteur (1) possédant un fond (3.1), des plateaux perforés (2), une virole (1.1) et un toit (1.2), ainsi que d'un système tubulaire central (4) dans la région de l'axe ou du milieu (Z-Z) de la cuve de réacteur (1) et la traversant, alors que l'espace annulaire (5) entre le système tubulaire central (4) et la virole de la cuve (1.1) est garni du lit fixe poreux (6) constitué du tas de matière de support (6a) et de la biomasse adaptée à cette matière de support, remarquable par les caractéristiques suivantes :

- le système tubulaire central tuyau (4) est évasé en forme d'entonnoir dans la direction de son extrémité inférieure se trouvant dans la région du fond de la cuve, et dans l'espace annulaire compris entre le pourtour extérieur de la base de l'entonnoir (4.1a) et le pourtour intérieur de la virole (1.1) est prévu un plateau perforé (2) qui sert à soutenir la matière de support (6a) et à introduire le liquide à épurer par le bas dans le lit fixe (6) ;

- en-dessous de la base de l'entonnoir (4.1a) et du plateau perforé se trouve une chambre d'entrée (K1) pour du liquide à épurer et une tête de raccordement à tuyau (RK) présentant au moins un embout d'entrée (r11) communiquant avec la chambre d'entrée (K1) et au moins un embout de sortie (r21) communiquant avec l'intérieur du système tubulaire central (4) ;

- la cuve de réacteur (1) délimite au-dessus du lit fixe (6) un espace (K2) pour le remous d'eau et un espace (G) se trouvant au-dessus, réservé au gaz et débouchant dans au moins un embout de sortie (16) pour le gaz, raccordé à la paroi formant le toit (1.2), de préférence au point le plus élevé géodésiquement, une chambre partielle (K31) étant délimitée dans l'espace pour le remous d'eau et pour le gaz (K2, G) par la paroi poreuse (9) d'un piège à mousse, cette chambre partielle (K31) communiquant avec l'extrémité supérieure (4.2) du système tubulaire central (4) et formant avec celui-ci un collecteur d'entrée pour l'eau qui circule ;

- dans la chambre partielle (K31) est monté au moins un collecteur d'entrée (ES) pour l'eau épurée, qui communique, par un conduit (10), avec une sortie (11) pour l'eau pure de la cuve du réacteur (1).

2. Réacteur à circulation et à lit fixe suivant la revendication 1, caractérisé en ce que l'évasement (4.1) en forme d'entonnoir du système tubulaire central (4) s'étend dans la direction de l'axe de la cuve (z-z) sur au moins unquart de la hauteur du lit fixe d'épuration (6), et en ce que la partie supérieure (4.3) du système tubulaire central (4) est constituée en conduit de section transversale constante.

3. Réacteur à circulation et à lit fixe suivant la revendication 1 ou 2, caractérisé en ce que la tête de raccordement à tuyau (RK) comporte au moins deux conduits tubulaires concentriques, le conduit extérieur (r12) débouchant dans la chambre d'entrée (K1) et le conduit intérieur (r22) étant raccordé au système tubulaire central (4) par la base de l'entonnoir (4.1a) de celui-ci, l'embout d'entrée (r11) étant raccordé au conduit extérieur (r12) et l'embout de sortie (r21) au conduit intérieur (r22).

4. Réacteur à circulation et à lit fixe suivant l'une des revendications 1 à 3, caractérisé en ce que le conduit (10) pour l'eau épurée s'étend du collecteur d'entrée (ES) pour l'eau épurée à la sortie (11) pour l'eau épurée, centralement, en passant dans le système tubulaire central (4) et dans le conduit intérieur (r22).

5. Réacteur à circulation et à lit fixe suivant la revendication 1, caractérisé en ce que le plateau perforé (2) est constitué d'un grand nombre de segments à profil ondulé (2.1), perforés et rangés les uns contre les autres dans la direction périphérique.

6. Réacteur à circulation et à lit fixe suivant la revendication 5, caractérisé par un profilé ondulé en forme de trapèze.

FIG 1

FIG 2

FIG 3

FIG 4